# EUROPEAN PATENT APPLICATION

(11) **EP 3 514 051 A1**
(43) Date of publication of application: **24.07.2019**
(21) Application number: 19000036.4
(22) Date of filing: 21.01.2019
(51) Int. Cl.: B63J 4/00, C02F 3/12, C02F 3/10

(54) **WASTE WATER TREATMENT FOR FLOATING AND RECREATIONAL VEHICLES**

(30) Priority: 23.01.2018 IT 201800001355 U
(71) Applicant: Angeli, Omar, 47822 Santarcangelo di Romagna (RN) (IT)
(72) Inventor: Angeli, Omar, 47822 Santarcangelo di Romagna (RN) (IT)
(74) Representative: Zanotti, Laura

(57) **Abstract**

An integrated system for the autonomous treatment and disposal of waste water for recreational vehicles in general or habitable floating structures comprises at least one module (2) composed of a box (3) containing the entire waste water treatment cycle, wherein the treatment process is carried out entirely in line inside the treatment box (3) automatically, said module (2) being suitable for being joined to a recreational vehicle in general or to at least one floating platform containing at least one housing element.

## Description

This invention relates to an integrated system for autonomous treatment and disposal of waste water for recreational vehicles in general or for habitable floating structures.

Specifically, this invention relates to connecting an integrated system for autonomous treatment and disposal of waste water to recreational vehicles in general (camper vans, caravans, van conversions, etc.) and to habitable floating structures also approved as CE certified boats, in particular used for temporary stays.

In recreational vehicles and in floating structures waste water is usually collected in tanks and manually discharged at suitably prepared centres. The tanks fill up very quickly and therefore users are obliged to empty them every day. Moreover, since tank emptying is not possible when the vehicle is moving, it is often necessary to wait for a predetermined time required to reach the collection centre, during which it is not possible to use the services which require discharging.

The main aim of the invention is to definitively solve the problem of emptying the tanks containing waste water, directly disposing of it, while facilitating this operation.

According to this invention, a system is provided having the features defined in claim 1.

With a solution that is both effective and inexpensive, which can be installed quickly and easily, this invention allows a recreational stay to be made more comfortable, eliminating the inconvenient manual operation for discharging waste water (grey and sewage) from the vehicle and/or from the floating platform, by automatically discharging the waste water directly to the ground or to the water.

Therefore, it is possible for the recreational vehicle or floating structure to be parked or moored for multiple days in the same place, without having to travel to collection centres for emptying the grey water/sewage tanks, by taking advantage of the opportunity to discharge it to the ground or to the water whilst fully respecting the environment.

Further advantages and features of this invention are more apparent in the detailed description which follows, with reference to the accompanying drawings, which illustrate an example of it without limiting the scope of the invention, in which:
- Figure 1 is a side view of one embodiment of the treatment system in accordance with this invention;
- Figure 2 is a cross-section of the system according to the plane line A - A of Figure 1;

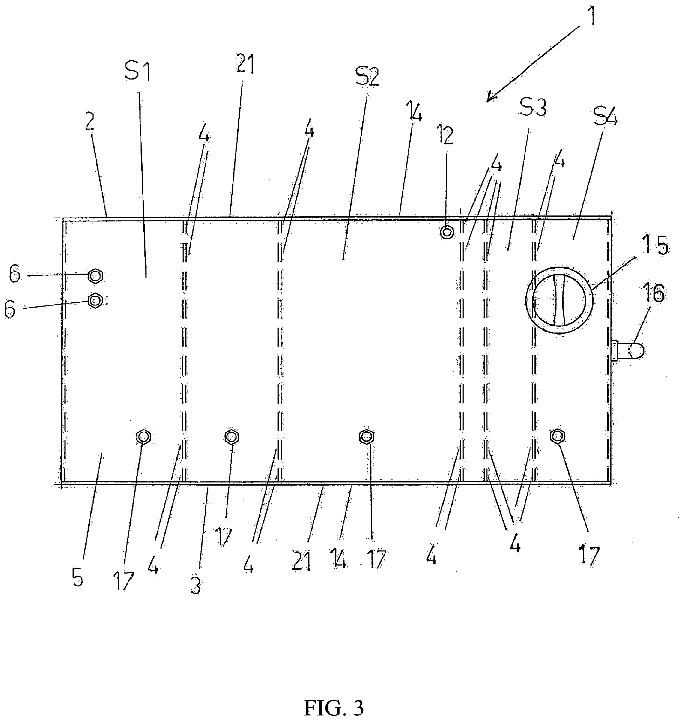

- Figure 3 is a top view of the system of Figure 1;
- Figure 4 is a schematic view of a preferred embodiment of insertion of the treatment system into a hull.

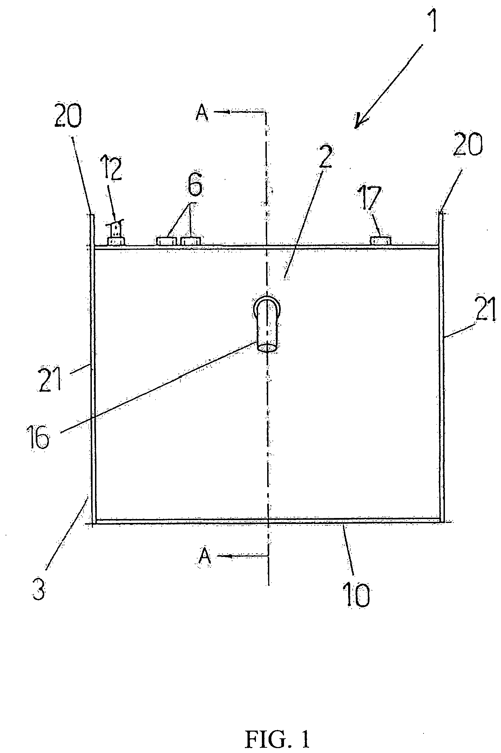

In Figure 1 the numeral 1 denotes an integrated system for autonomous treatment and disposal of waste water for recreational vehicles in general or for habitable floating structures.

The system 1 comprises at least one module 2 composed of a box 3 containing the entire waste water treatment cycle, wherein said module 2 is suitable for being joined to a recreational vehicle in general or to at least one floating platform containing at least one housing element. Therefore, the system 1 is integrated in the recreational vehicle or in the floating platform.

In one embodiment, the module 2 is suitable for being joined to at least one floating platform containing at least one housing element preferably selected from a caravan, a tent, a prefabricated structure and the like, all also approved as a CE certified boat, in order to obtain the discharging of clean, odourless and clear water, in compliance with EN 12566/3 standards and the like which govern discharging to ground or to water.

In another embodiment, the module 2 is suitable for being joined to at least one recreational vehicle in general (camper vans, van conversions, caravans, motor cars, etc.), in order to obtain the discharging of clean, odourless and clear water, in compliance with EN 12566/3 standards and the like which govern discharging to ground or to water.

The treatment process is carried out entirely in line inside the treatment box/module 2, automatically.

The treatment box 3 is internally divided by hollow spaces 4 housing pipes with filters which regulate the forced passage of the waste water and its treatment.

The box 3 is advantageously made of polypropylene. The outer walls of the box are preferably approximately 10 mm thick.

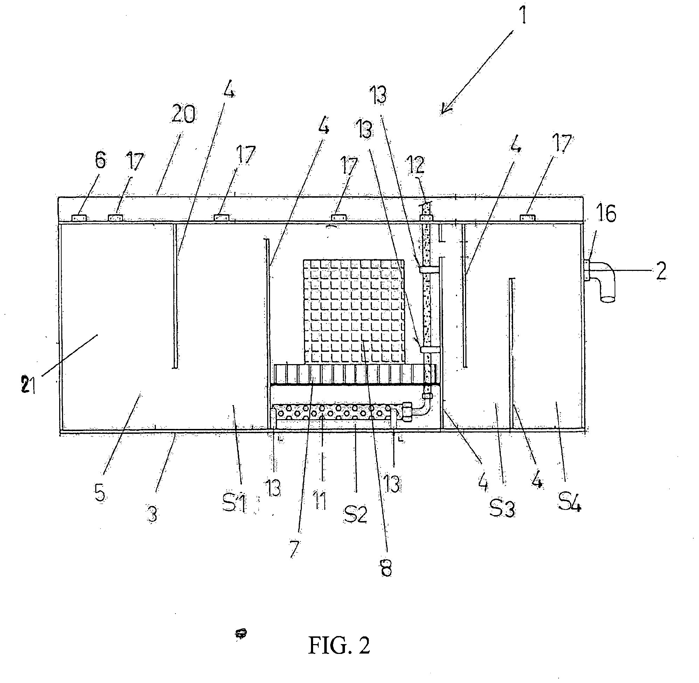

As illustrated in Figure 2, the box 3 is divided into four segments S1, S2, S3, S4.

The first segment S1 comprises a collecting tank 5 for collecting the waste water which is introduced through at least one inlet pipe coupling 6, preferably threaded. There may be two or more inlet pipe couplings 6, each connected to a particular drain of the recreational vehicle or of the floating platform.

By using a macerator applied externally to the box 3 (usually joined to the toilet) the already macerated waste water is conveyed to the entrance of the first segment S1 directly from the inlet pipe coupling 6.

Depending on the dimensions, the treatment box/module 2 allows multiple connections, with the possibility of connection:
- from the kitchen to the first segment S1 of the treatment unit (Grease condensation tank);
- from the grey water drains to the relative segment S1;
- from the drains from the toilets to the relative segment S1.

The first sedimentation of the sludges occurs in the first segment S1.

When the segment S1 is full, the waste water passes by falling into the second segment S2 which is a kind of "bioreactor". In the second segment S2 an oxidation - reduction reaction takes place, which allows the reduction of pollutants.

The second segment S2 comprises at least one filter 7, in particular a mechanical filter made of plastic.

There is preferably a plurality of filters present. The second segment S2 comprises at least one mesh cage 8 which feeds the production of bacterial, flora essential to the treatment process. The filters 7 and the mesh cage 8 are mounted on suitable supports 9.

In one advantageous embodiment, there is at least one activated carbon filter.

At the bottom 10 of the box 3, the second segment S2 advantageously comprises an oxygen diffusing tube 11, in particular fed by an air pump. The diffusing tube 11 allows oxygen to be dissolved in the water, resulting in an increase in the bacterial flora which allows a reduction of the pollutants. The oxygen is sent to the diffuser 11 by a feed tube 12 connected to a compressor, preferably outside the box 3. In the embodiment illustrated, the diffusing tube 11 and the feed tube 12 are supported by brackets 13.

Advantageously, the walls 14 of the second segment S2 are insulated, in particular to keep the treatment process at a temperature of not less than 12°C. This allows installation of the treatment system 1 even in lakes and its use during winter.

From the second segment S2 the waste water then passes by falling into the third segment S3 which constitutes a settler, in which the suspended solids are separated from the water.

From the third segment S3 the water passes into the fourth segment S4 in which the clean water accumulates. The fourth segment S4 is preferably equipped with an inspection hatch 15. From the fourth segment S4 the clean water is disposed of by means of a pump activated by a float or directly by falling. If disposal occurs by falling, there is no inspection hatch in segment S4.

The water is discharged by means of a flexible tube 16. In the case of floating platforms, the flexible tube 16 for discharge is lowered below the water level.

In the embodiment illustrated, the box 3 comprises at least one ventilation hole 17, preferably threaded. Advantageously, there are two ventilation holes 17 at the first segment S1, one ventilation hole 17 at the second segment S2 and one ventilation hole 17 at the fourth segment S4.

The ventilation holes 17 are connected by a pipe and allow venting of the air coming out.

In the case of floating platforms, the end of the pipe which connects the ventilation holes 17 extends several centimetres underwater.

The waste water treatment system 1 is installed in a recreational vehicle (camper van, caravan, van conversion, etc.) or a habitable floating structure, in particular a structure also approved as a CE certified boat, by mounting an autonomous box 3, even substituting the sewage and grey water collecting tanks present on the vehicle or on the floating structure, which is able to carry out the entire waste water treatment cycle, from the kitchen waste grease condensation tank to the grey water/sewage drains, leading to the release of clean, odourless and clear water, in compliance with EN 12566/3 standards and the like which govern discharging to ground or to water.

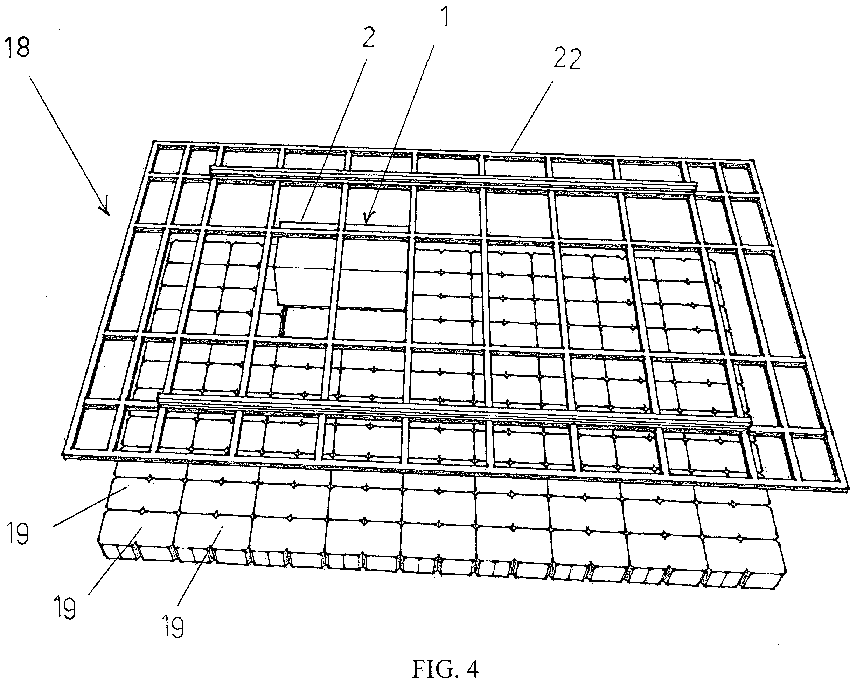

Figure 4 illustrates a particular application of the treatment system 1 joined to a floating platform.

The treatment system 1 is integrated in the hull 18 of the platform.

Advantageously, the hull 18 comprises floating modules 19, which are joined to each other and arranged in such a way as to leave a space suitable for housing the treatment module 2. The modules 19 are preferably made of polyethylene.

The treatment module 2 advantageously has two lateral tabs which are joined, in particular welded, to the upper edges 20 of the lateral walls 21 of the box 3. The tabs, preferably approximately 10 cm wide, are joined to the modules 19 of the hull 18 which are adjacent to the box 3. The module 2 is then fixed to the hull 18 by means of a frame 22.

This gives a floating hull 18 with integrated treatment system 1.

The hull 18 is preferably approximately 5.5 metres wide. The treatment box 3 extends for a length of around 1.9 metres.

In the case of recreational vehicles, the box 3 is positioned so that it substitutes the normal accumulating tanks and has more compact dimensions.

## Claims

1. An integrated system for the autonomous treatment and disposal of waste water for recreational vehicles in general or habitable floating structures, comprising at least one module (2) composed of a box (3) containing the entire waste water treatment cycle, wherein the treatment process is carried out entirely in line inside the treatment box (3) automatically, said module (2) being suitable for being joined to a recreational vehicle in general or to at least one floating platform containing at least one housing element.

2. The integrated system according to claim 1, **characterised in that** the treatment box (3) is internally divided by hollow spaces (4) housing pipes (11, 12) with filters (7) which regulate the forced passage of the waste water and its treatment.

3. The integrated system according to claim 2, **characterised in that** at least one filter (7) is of the mechanical type, preferably made of plastic.

4. The integrated system according to claim 2 or 3, **characterised in that** at least one filter is an activated carbon filter.

5. The integrated system according to any of the preceding claims, **characterised in that** the treatment box (3) has at least one first segment (S1) comprising a collecting tank (5) for collecting the waste water, wherein sedimentation of the sludges occurs.

6. The integrated system according to claim 5, **characterised in that** the first segment (S1) has at least one waste water inlet pipe coupling (6) suitable for connection to at least one drain of the recreational vehicle or of the floating structure.

7. The integrated system according to any of the preceding claims, **characterised in that** the treatment box (3) has at least one second segment (S2) comprising at least one filter (7).

8. The integrated system according to claim 7, **characterised in that** at least one oxidation - reduction reaction occurs in the second segment (S2).

9. The integrated system according to claim 7 or 8, **characterised in that** the second segment comprises an oxygen diffusing tube (11).

10. The integrated system according to claim 7 or 8 or 9, **characterised in that** at least the walls (14) of the second segment (S2) are insulated.

11. The integrated system according to any of the preceding claims, **characterised in that** the treatment box (3) has at least one ventilation hole (17).

12. A recreational vehicle comprising an integrated system according to any of the preceding claims, wherein said system is connectable to at least one drain of the recreational vehicle.

13. A floating platform comprising an integrated system according to any of the preceding claims 1 to 11, wherein said system is connectable to at least one drain of the floating platform.

14. A hull for a floating platform comprising a plurality of floating modules (19) joined to at least one module (2) of the integrated system according to any of the preceding claims 1 to 11.

15. A floating platform comprising a hull (18) according to claim 14, wherein the integrated system is connectable to at least one drain of the floating platform.
